(19) Europäisches Patentamt
European Patent Office
Office européen des brevets

(11) **EP 3 675 649 B1**

(12) **EUROPEAN PATENT SPECIFICATION**

(45) Date of publication and mention
of the grant of the patent:
**27.12.2023   Bulletin 2023/52**

(51) International Patent Classification (IPC):
**A23K 50/48** (2016.01)      **A23K 20/163** (2016.01)
**A23K 10/30** (2016.01)

(21) Application number: **19742257.9**

(22) Date of filing: **31.05.2019**

(52) Cooperative Patent Classification (CPC):
**A23K 20/163; A23K 10/30; A23K 50/48**

(86) International application number:
**PCT/US2019/035047**

(87) International publication number:
**WO 2019/232474 (05.12.2019 Gazette 2019/49)**

(54) **COMPOSITIONS FOR INCREASING INTAKE OF WATER IN FELINES**

ZUSAMMENSETZUNGEN ZUR ERHÖHUNG DER WASSEREINNAHME BEI KATZEN

COMPOSITIONS POUR AUGMENTER L'INGESTION D'EAU PAR LES CHATS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **01.06.2018   US 201862679182 P**

(43) Date of publication of application:
**08.07.2020   Bulletin 2020/28**

(73) Proprietor: **Hill's Pet Nutrition, Inc.
Topeka, KS 66603 (US)**

(72) Inventors:
• **JEWELL, Dennis**
  **Lawrence, Kansas 66049 (US)**
• **GROSS, Kathy**
  **Topeka, Kansas 66618 (US)**
• **OGLEBY, Blair**
  **Topeka KS66617 (US)**
• **SCHERL, Dale**
  **Lawrence KS 66049 (US)**

(74) Representative: **Wichmann, Hendrik
Wuesthoff & Wuesthoff
Patentanwälte PartG mbB
Schweigerstraße 2
81541 München (DE)**

(56) References cited:
**WO-A1-03/075678        WO-A2-02/051443
US-A1- 2004 096 480    US-B1- 6 248 390**

## Description

### BACKGROUND

Proper and sufficient hydration or consumption of water aids in many bodily functions and processes, such as the elimination of waste, digestion, and the regulation of body temperature. Accordingly, it is widely recognized and accepted that the general health of humans and animals is influenced not only by nutrition, but also by proper and sufficient hydration. The effects of insufficient hydration are readily observed in companion animals (*e.g.*, dogs and cats), which often exhibit increased susceptibility to lower urinary tract diseases (LUTDs) (*e.g.*, alluria, bacterial cystitis, urolithiasis, idiopathic obstruction, *etc.*). While the etiology of these diseases and disorders is not entirely clear, relatively high concentration of minerals in the urine of the companion animals is often correlated with these diseases and disorders.

In view of the foregoing, efforts have focused on increasing the consumption of water to correspondingly increase the volume of urine, and thereby decrease the concentration of the minerals in the urine associated with the LUTDs. While increasing the consumption of water in the companion animals is desirable, it is not readily achievable. For example, many companion animals, such as domesticated cats, often have no interest in increasing their consumption of water. Additionally, when functional ingredients (*e.g.*, micronutrients, medicines, *etc.*) are added to water for the treatment or prevention of various diseases and conditions, companion animals may often exhibit an increased reluctance to consume the water due to the reduced palatability of the functional ingredients. Accordingly, palatants or flavorants may often be added to the water to mask the functional ingredients and promote sufficient hydration. The palatants and flavorants, however, may not always be successful in either enticing the companion animals to drink or masking the taste of the functional ingredients.

What is needed, then, is a composition and method for increasing or promoting the consumption of water in companion animals and delivering functional ingredients to the companion animals.

WO 02/051443 A2 discloses an aqueous gel suitable for ingestion by a cat or dog comprising, (a.) an effective amount of a gelling agent, (b.) an effective amount of a cat or dog palatability enhancing agent, and c. at least about 85 wt. % water. US 6,248,390 B1 discloses a shelf stable, ready to use, essentially tasteless and odorless water-like fluid for humans/animals comprised of safe water and a significant quantity of one or more water-soluble dietary fibers, wherein the fiber-water is intended to be consumed by drinking or by enteral feeding alone, and/or in combination, wherein the liquid may be consumed directly hot or cold or after use, at any required temperature, in the preparation! reconstitution of beverages or liquid food product.

### BRIEF SUMMARY

This summary is intended merely to introduce a simplified summary of some aspects of one or more embodiments of the present disclosure. Further areas of applicability of the present invention will become apparent from the detailed description provided hereinafter. This summary is not an extensive overview, nor is it intended to identify key or critical elements of the present teachings, nor to delineate the scope of the disclosure. Rather, its purpose is merely to present one or more concepts in simplified form as a prelude to the detailed description below. Claimed is an aqueous composition for increasing the hydration of a feline comprising: water, and an effective amount of a viscosity modifying agent comprising methylcellulose; wherein the viscosity modifying agent is present in an amount of from 0.05 wt.% to 1 wt.%, and wherein the composition has a viscosity greater than 5 mPa·s to 290 mPa·s when determined at about 25°C as the internal resistance to flow exhibited by water or the ratio of shearing stress of shear using a viscometer. Further claimed is a composition as defined in the claims for use in a method for: improving a Calcium Oxalate Risk Index (CORI) score; reducing struvite, oxalate or other crystals and stones in the urine and the upper and lower urinary tract; reducing the concentration of calcium in the urine; reducing the concentration of stone forming components in the urine; reducing the fractional excretion of calcium; reducing urine specific gravity; reducing urinary saturation or urine; increasing fluid uptake; increasing urine output, or reducing hairball formation, in a feline companion animal.

The aspects and utilities embodied in the present disclosure are achieved by providing a composition as defined in the claims suitable for ingestion by a companion animal. The composition includes an effective amount of a viscosity modifying agent from 0.05 wt% to 1 wt% comprising methylcellulose and water, where the composition has a viscosity of greater than 5 mPa s (in the following: cP) to 290 cP when determined at about 25°C as the internal resistance to flow exhibited by water or the ratio of shearing stress of shear using a viscometer.

In at least one embodiment, the composition has a viscosity of from 5 cP to 290 cP, about 10 cP to 290 cP, about 15 cP to 290 cP, or about 40 cP to 290 cP. In another embodiment, the viscosity of the composition is less than or equal to 280 cP.

The viscosity enhancing agent includes methylcellulose. In another embodiment, the viscosity enhancing agent may include hydroxypropyl methylcellulose or hydroxypropoxyl methoxylcellulose.

The viscosity modifying agent is present in an amount of from 0.05 wt.% to 1 wt.%, optionally about 0.15 wt.%

to about 0.75 wt.%, or about 0.25 wt.% to about 0.5 wt.%.

In another embodiment, the composition may include greater than 0.05 wt% and less than or equal to 1.0 wt% of the methylcellulose. In another embodiment, the composition may include greater than 0.25 wt% and less than or equal to 1.0 wt% of the methylcellulose. In another embodiment, the composition may include greater than 0.75 wt% and less than or equal to 1.0 wt% of the methylcellulose.

In at least one embodiment, the viscosity modifying agent may further include starch (e.g. rice starch).

In another embodiment, the viscosity modifying agent may further include one or more of a plant mucilage, a plant gum, dextrin, maltodextrin, a galactomannan, an arabanogalactan, a beta glucan, a pectin, a water-soluble hemicellulose, inulin, an alginate, agar, carrageenan, psyllium, guar gum, gum traganth, gum karya, gum ghatti, gum acacia, gum arabic, a partially hydrolyzed product thereof, or any combination thereof.

In at least one embodiment, the composition may include a flavorant. In one example, the flavorant may include one or more of a coconut concentrate, a cranberry concentrate, a green tea, a fruit concentrate, a vegetable concentrate, a vitamin supplement, an amino acid, a protein, a plant extract, peppermint oil, spearmint (e.g. spearmint oil), a rosemary extract, parsley, a malodor control agent, or any combination thereof.

The composition may provide an increase of at least 0.05 g, at least 0.1 g, at least 0.2 g, at least, 0.3 g, at least 0.4 g, at least 0.5 g, at least 0.6 g, at least 0.7 g, at least 0.8 g, or at least 0.9 g in retention compared to a composition having a viscosity less than about 5 cP, in a Viscous Water Visualization Assay.

The composition may increase daily consumption by about 20%, about 50%, about 75%, about 100%, about 125%, or about 150% versus a composition having a viscosity less than about 5 cP.

In at least one embodiment, the composition further includes a functional ingredient. In at least one embodiment, the functional ingredient may be formulated to be delivered to an oral cavity and/or a digestive tract of the companion animal. In at least one embodiment, the functional ingredient may include one or more of an antimicrobial, a prebiotic, a probiotic, an oral care active, a pharmaceutical agent, or any combination thereof. In at least one embodiment, the functional ingredient may include one or more of lactic acid, boswellia extract, a beta-glucan, betaine, green tea, fenugreek, tulsi, arginine, lysine, or any combination thereof.

The composition may further include a functional ingredient configured to remain in contact with an oral cavity or a digestive tract of the companion animal for a prolonged period of time. In another embodiment, the functional ingredient may be configured to treat an oral condition of the companion animal, and may be selected from the group including polyphosphates, antimicrobials, fluorides, and combinations thereof.

The functional ingredient may include a pharmaceutically active component. In another embodiment, the pharmaceutically active component may be lactic acid.

The aspects and utilities embodied in the present disclosure may also be achieved by providing a composition as defined in the claims for use in a method as defined in the claims. The method may include feeding the companion animal the composition of any one of the preceding paragraphs.

Useful for understanding the invention is a method for increasing the consumption of water in a companion animal. The method may include feeding the companion animal in need there of the composition of any one of the preceding paragraphs.

Further claimed is a composition as defined in the claims for use in a method for reducing hairball formation in a feline companion animal. The method may include feeding the companion animal in need there of the composition of any one of the preceding paragraphs.

Further claimed is a composition as defined in the claims for use in a method for reducing calcium oxalate stone formation in a feline companion animal. The method may include feeding the companion animal in need there of the composition of any one of the preceding paragraphs.

The aspects and utilities embodied in the present disclosure may also be achieved by providing a composition as defined in the claims suitable for ingestion by a companion animal. The composition includes water and may comprise a viscosity enhancing agent comprising methylcellulose in an amount of 0.25 wt% to 1.25 wt% based on a total weight of the composition. The composition may have a viscosity of from 10 cP to 290 cP.

The aspects and utilities embodied in the present disclosure may also be achieved by providing a composition as defined in the claims suitable for ingestion by a companion animal. The composition includes water and a viscosity enhancing agent, and may include a functional ingredient. The viscosity enhancing agent may be provided in an amount of 0.25 wt% to 1 wt%. The viscosity of the composition may be from 10 cP to 290 cP, and the functional ingredient may be configured to remain in contact with an oral cavity or a digestive tract of the companion animal for a prolonged period of time.

The aspects and utilities embodied in the present disclosure may also be achieved by providing a composition as defined in the claim for use in a method for improving a Calcium Oxalate Risk Index (CORI) score, reducing struvite, oxalate or other crystals and stones in the urine and the upper and lower urinary tract (i.e., renal, bladder urethra); reducing the concentration of calcium in the urine; reducing the concentration of stone forming components in the urine; reducing the fractional excretion of calcium; reducing urine specific gravity; reducing urinary saturation of minerals;

reducing the relative super saturation of urine; increasing fluid intake; increasing urine output; or reducing hairball formation in a companion animal. The method may include administering or feeding any one of the compositions disclosed herein to the companion animal.

In at least one embodiment, the companion animal may consume greater than about 90 g/day, greater than about 100 g/day, greater than about 110 g/day, greater than about 120 g/day, or greater than about 130 g/day of the composition.

The companion animal as defined in the claims is a feline.

In at least one embodiment, administering or feeding any one of the compositions disclosed herein to the companion animal may reduce hairball formation.

Useful for understanding the invention is a method for identifying a composition that provides a hydration benefit to a mammal. The method may include inserting a first probe into a vessel containing a control composition having a viscosity of less than about 5 cP; determining the amount of the control composition retained on the first probe; inserting a second probe into a vessel containing a test composition; determining the amount of the test composition retained on the second probe; comparing the amount of the control composition retained on the first probe to the amount of the test composition retained on the second probe; wherein when the difference between the amount of the test composition retained on the second probe and the amount of control composition retained on the first probe is greater than 0.05 g, greater than 0.1 g, greater than 0.15 g, greater than 0.2 g, or greater than 0.25 g, the composition is identified as providing a hydration benefit to a mammal. The difference between the amount of the test composition retained on the second probe and the amount of control composition retained on the first probe may be greater than about 0.3 grams, about 0.35 grams, about 0.4 grams, or about 0.45 grams. The difference between the amount of the test composition retained on the second probe and the amount of control composition retained on the first probe may be about 0.05 grams. The difference between the amount of the test composition retained on the second probe and the amount of control composition retained on the first probe may be 0.48 grams. The hydration benefit may include one or more of an improved CORI score; a reduction in struvite, oxalate or other crystals and stones both in the urine and the upper and lower urinary tract (i.e., renal, bladder urethra); a reduction in concentration of calcium in the urine; a reduction in the concentration of stone forming components in the urine; a reduction in the fractional excretion of calcium; a reduction in urine specific gravity; reduced urinary saturation of minerals; reduction in the relative super saturation of urine; increased fluid intake; and increased urine output.

The method useful for understanding the invention for identifying the composition that provides a hydration benefit to a mammal may include determining (e.g. quantifying) the hydration benefit provided to a companion animal by the test composition. The hydration benefit provided to the companion animal may be determined according to the following formula: Hydration benefit = ((wt. on probe from test composition) - (wt. on probe from control composition)) * 2.7 grams.

The method useful for understanding the invention for identifying the composition that provides a hydration benefit to a mammal may include determining the ability of the test composition to deliver a bioactive substance to the bladder or urinary tract.

The method useful for understanding the invention for identifying the composition that provides a hydration benefit to a mammal may include utilizing additional vessels, additional probes, and additional test compositions. For example, the method may include utilizing about 2 to about 100 vessels, from about 2 to about 100 probes; and from about 2 to about 100 test compositions. Each of the probes may include a substrate having a textured surface. Each of the probes may include a substrate that mimics the anatomy of the tongue of a companion animal. Each of the probes may include a substrate comprising a plurality of protuberances. Each of the protuberances may have a dimension of from about 1 nm to about 1 cm. Each of the probes may be or include an emery board. The mammal may be a companion animal. In at least one embodiment, the companion animal may be a canine or a feline. The companion animal as defined in the claims is a feline.

## DETAILED DESCRIPTION

As used throughout, ranges are used as shorthand for describing each and every value that is within the range. Any value within the range may be selected as the terminus of the range.

Unless otherwise specified, all percentages and amounts expressed herein and elsewhere in the specification should be understood to refer to percentages by weight. The amounts given are based on the active weight of the material.

Additionally, all numerical values are "about" or "approximately" the indicated value, and take into account experimental error and variations that would be expected by a person having ordinary skill in the art. It should be appreciated that all numerical values and ranges disclosed herein are approximate valves and ranges, whether "about" is used in conjunction therewith. It should also be appreciated that the term "about," as used herein, in conjunction with a numeral refers to a value that may be +/-1% (inclusive) of that numeral, +/- 2% (inclusive) of that numeral, +/- 3% (inclusive) of that numeral, +/- 5% (inclusive) of that numeral, +/- 10% (inclusive) of that numeral, or +/- 15% (inclusive) of that numeral. It should further be appreciated that when a numerical range is disclosed herein, any numerical value falling within the range is also specifically disclosed.

It has been surprisingly and unexpectedly discovered that compositions combining water with a viscosity enhancing agent promote increased consumption of water in companion animals over water without the viscosity enhancing agent. Increasing the consumption of water in the companion animals may decrease the specific gravity of urine and thereby promote urinary tract health. It has also been surprisingly and unexpectedly discovered that the compositions, including water and the viscosity enhancing agent, produce or form a suitable vehicle to facilitate the delivery of a functional ingredient. For example, the compositions may be adapted or configured to maintain contact with surfaces of an oral cavity for a relatively longer or prolonged period of time (*e.g.*, residence time), thereby increasing the delivery of the functional ingredient via surfaces (*e.g.*, mucous membranes) of the oral cavity. Accordingly, the compositions disclosed herein may include water, a viscosity enhancing agent, and one or more functional ingredients. It has further been surprisingly and unexpectedly discovered that compositions including a viscosity enhancing agent, such as methyl cellulose, decreases the incidence and/or the formation of hairballs in cats. Claimed is an aqueous composition for increasing the hydration of a feline comprising: water, and an effective amount of a viscosity modifying agent comprising methylcellulose; wherein the viscosity modifying agent is present in an amount of from 0.05 wt.% to 1 wt.%, and wherein the composition has a viscosity greater than 5 mPa s to 290 mPa·s when determined at about 25°C as the internal resistance to flow exhibited by water or the ratio of shearing stress of shear using a viscometer. Further claimed is a composition as defined in the claims for use in a method for: improving a Calcium Oxalate Risk Index (CORI) score; reducing struvite, oxalate or other crystals and stones in the urine and the upper and lower urinary tract; reducing the concentration of calcium in the urine; reducing the concentration of stone forming components in the urine; reducing the fractional excretion of calcium; reducing urine specific gravity; reducing urinary saturation or urine; increasing fluid uptake; increasing urine output, or reducing hairball formation, in a feline companion animal.

*Viscosity Enhancing Agent or Thickener*

The compositions disclosed herein includes a viscosity enhancing agent that is acceptable to a feline. As used herein, the term "viscosity enhancing agent" may refer to any one or more chemical compounds, substances, or materials that increases the viscosity of water when combined therewith. Viscosity may refer to the internal resistance to flow exhibited by a fluid (*e.g.*, water) or the ratio of shearing stress to rate of shear, and may be measured in poise or centipoise (cP). The viscosity of the various compositions discussed and described herein is determined using a Viscometer at a temperature of about 25°C as the internal resistance to flow exhibited by water or the ratio of shearing stress to rate of shear. For example, a Brookfield Viscometer, Model DV-III+, with a small sample adapter, for example, a number 3 spindle, may be used at about 75 RPM. The small sample adapter may allow the sample to be cooled or heated by the chamber jacket to maintain the temperature of the sample surrounding the spindle at a temperature of about 25°C.

The viscosity enhancing agent comprises methylcellulose and may further comprise a solid (*e.g.*, a dry powder) or a fluid (*e.g.*, a liquid) that increases the viscosity of water. Illustrative viscosity enhancing agents may include, but are not limited to, one or more polysaccharides, gelatin, carrageenan, agar, alginates, pectin, xanthan, guars, gum arabic, gum karaya, gum tragacanth, tara gum, gellan gum, pullulan, curdlan, microcrystalline cellulose, carboxymethylcellulose, , methylcellulose, hydroxypropyl methylcellulose, hydroxypropoxyl methoxylcellulose, chitosan, gum ghatti, locust bean, konjac flour, starch, and the like, and combinations thereof. In at least one embodiment, the viscosity enhancing agent has hydroxypropoxyl substitutions and methoxyl substitutions. In another example, the viscosity enhancing agent is a methylcellulose having hydroxypropoxyl substitutions and methoxyl substitutions. In yet another example, the viscosity enhancing agent is a hydroxypropyl methylcellulose having hydroxypropoxyl substitutions and methoxyl substitutions. The viscosity enhancing agent may be or include METHOCEL™ E4M, which is commercially available from The Dow Chemical Company of Midland, MI, and may include about 28 wt% to about 30 wt% of methyoxyl substitutions, and about 7 wt% to about 12 wt% of hydroxypropoxyl substitutions. In a preferred embodiment, the composition is free or substantially free of pectin and/or alginates. For example, the viscosity enhancing agent does not include either pectin or alginates.

The amount of the viscosity enhancing agent included in the composition is from 0.05 wt% to 1 wt%. For example, the amount of the viscosity enhancing agent in the composition may be from 0.05 wt%, about 0.10 wt%, about 0.15 wt%, about 0.20 wt%, about 0.25 wt%, about 0.30 wt%, about 0.35 wt%, about 0.40 wt%, about 0.45 wt%, about 0.50 wt%, about 0.55 wt%, or about 0.60 wt% to about 0.70 wt%, about 0.75 wt%, or 1.0 wt. In another example, the amount of the viscosity enhancing agent in the composition may be about 0.1 wt% , about 0.2 wt%, about 0.30 wt%, about 0.40 wt%, about 0.50 wt%, about 0.60 wt%, about 0.70 wt%, about 0.80 wt%, or about 0.90 wt%. As defined in the claims, the composition does not include the viscosity enhancing agent in a concentration greater than 5.0 wt%, as such concentrations, result in the formation of a gel, which results in reduced consumption by the companion animal. As used herein, a "gel" may refer to a solid, jelly-like material or substance that exhibits substantially no flow when in a steady-state. For example, a "gel" may be a material or substance having a viscosity greater than or equal to 280 cP, 300 cP, 350 cP, 400 cP, 450 cP, or 500 cP. A "gel" may also refer to a colloid in a more solid form than a sol, which may be suitable for consumption by the companion animal. As used herein, a "sol" may be a fluid colloidal system or a material or substance that does exhibit flow in a steady-state. For example, a "sol" may be a material or substance having a viscosity less than or equal to 280 cP, 300 cP, 350 cP, 400 cP, 450 cP, or 500 cP.

The amount of the viscosity enhancing agent included in the composition is from 0.05 wt% to 1 wt%. The viscosity enhancing agent provides the composition with a viscosity of at least 5 cP, optionally a viscosity of at least 50 cP, and further optionally a viscosity of at least 275 cP.

In some embodiments, the composition may have a viscosity from about 10 cP, about 15 cP, about 20 cP, about 25 cP, about 30 cP, about 35 cP, about 40 cP, about 45 cP, about 50 cP, about 55 cP, about 60 cP, about 65 cP, about 70 cP, about 75 cP, about 80 cP, about 85 cP, about 90 cP, about 95 cP, about 100 cP, about 105 cP, about 110 cP, about 115 cP, about 120 cP, about 125 cP, about 130 cP, about 135 cP, about 140 cP, about 145 cP, about 150 cP, about 155 cP, about 160 cP, about 165 cP, about 170 cP, about 175 cP, about 180 cP, about 185 cP, about 190 cP, about 195 cP, about 200 cP, about 205 cP, about 210 cP, about 215 cP, about 220 cP, about 225 cP, about 230 cP, about 235 cP, about 240 cP, about 245 cP, about 250 cP, about 255 cP, about 260 cP, about 265 cP, about 270 cP, about 275 cP, about 280 cP, about 285 cP, or 290 cP.

In some embodiments, the composition may have a viscosity from 5 cP to 290 cP, or from about 7.5 cP to 290 cP, about 10 cP to 290 cP, about 20 cP to about 250 cP, about 50 cP to about 225 cP, about 100 cP to about 200 cP, or about 150 cP to about 175 cP. In some embodiments, the viscosity enhancing agent may be included in an amount sufficient to provide the composition with a viscosity of from about 200 cP to 290 cP.

The amount of water included in the composition may widely vary. In at least one embodiment, the amount of water in the composition may be at least about 95 wt%. For example, the amount of water included in the composition may be at least 95 wt%, at least 96 wt%, at least 97 wt%, at least 98 wt%, at least 99 wt%, or greater. In an exemplary embodiment, the amount of water included in the composition is from about 97 wt% to about 99 wt%, about 98 wt% to about 99 wt%, or about 98.5 wt% to about 99 wt%. In another embodiment, the amount of water in the composition may be present in an amount of at least about 80 wt%.

In at least one embodiment, the composition is free or substantially free of flavorants or palatability enhancers. As used herein, the terms "flavorant(s)" or "palatability enhancer(s)" may refer to any substance that is not a viscosity enhancing agent and that is added to the composition to attract the companion animal (e.g., a dog, a cat, etc.) to the composition, or entice the companion animal to consume the composition. As used herein, the terms "free" or "substantially free" of a material may refer to a composition that contains less than 0.1 wt%, less than 0.05 wt%, less than 0.01 wt%, less than 0.005 wt%, or less than 0.0001 wt% of the material. Illustrative flavorants may include, but are not limited to, one or more animal digest, animal hydrolysates, animal offal (e.g., liver, heart, lungs, etc.), meats (e.g., beef, lamb, pork, chicken, turkey, etc.), seafood (e.g., fish, crab, shrimp, etc.), dairy products (e.g., milk, cheese, etc.), yeast, peptides, amino acids, nucleotides, fats, oils, artificial meat and/or seafood flavors, Maillard reactants, sugars, plant extracts, other natural and/or artificial aromas that are attractive to cats or dogs, and the like, and combinations thereof.

The composition may have a neutral pH, an alkaline pH, or an acidic pH. For example, the composition can have a pH of about 7, about 8, about 9, or about 10 to about 11, about 12, or about 13. In another example, the neutralized composition or emulsifier can have a pH from about 8 to about 13, about 8 to about 12, about 8 to about 11.5, about 8 to about 11, about 9 to about 12, or about 10 to about 11. In some embodiments, the composition can have a pH of about 2, about 2.5, about 3, about 3.5, about 4, about 4.5, about 5, about 5.5, about 6, or about 6.5. In some embodiments, the pH of the composition is slightly acidic, e.g. about 6.75. In another example, the pH of the composition is determined by the water used. For example, the pH of the composition may be neutral or slightly basic (e.g., tap water).

*Functional Ingredients*

In at least one embodiment, combining water with the viscosity enhancing agent may form or provide a vehicle for the enhanced delivery of one or more functional ingredients. For example, the composition including water and the viscosity enhancing agent as defined in the claims may maintain contact with the surfaces of the oral cavity for a relatively longer period of time (e.g., residence time), thereby increasing the efficacy of delivering a functional ingredient to the companion animal via the mucous membranes. In another example, the composition as defined in the claims may exhibit increased residence time on surfaces of the teeth to thereby increase the efficacy of delivering a functional ingredient (e.g., whitener, cleaner, anti-bacterial, etc.) thereto. In yet another example, as further described herein, the composition as defined in the claims may exhibit increased residence time in the esophagus and/or gastrointestinal tract of the companion animal, thereby increasing the efficacy of delivering a functional ingredient to the companion animal, the esophagus, and/or the gastrointestinal tract thereof. Accordingly, the compositions disclosed herein may include water and the viscosity enhancing agent as defined in the claims, and one or more functional ingredients.

The residence time of the composition with the surfaces of the oral cavity, the esophagus, and/or the gastrointestinal tract of the companion animal may be greater than the residence time of water alone. For example, the residence

6

time of the composition may be at least 1% greater, at least 2% greater, at least 5% greater, at least 10% greater, at least 15% greater, at least 20% greater, at least 25% greater, at least 30% greater, at least 45% greater, at least 60% greater, at least 75% greater, at least 90% greater, or at least 95% greater than the residence time of water alone. In another example, the residence time of the composition may be at least 1.1x greater, at least 1.2x greater, at least 1.3x greater, at least 1.4x greater, at least 1.5x greater, at least 1.6x greater, at least 1.7x greater, at least 1.8x greater, at least 1.9x greater, at least 2.0x greater, at least 2.2x greater, at least 2.4x greater, at least 2.6x greater, at least 2.8x greater, at least 3.0x greater, or at least 3.2x greater.

The amount of any one or more of the functional ingredients included in the composition may vary widely. For example the amount of any one or more of the functional ingredients in the composition may be from about 0.01 wt%, about 0.02 wt%, 0.02 wt%, about 0.03 wt% 0.03 wt%, about 0.04 wt%, 0.04 wt%, about 0.05 wt% 0.05 wt%, about 0.06 wt%, about 0.07 wt%, about 0.08 wt%, about 0.09 wt%, about 0.10 wt%, about 0.11 wt%, about 0.12 wt%, about 0.13 wt%, about 0.14 wt%, about 0.15 wt%, about 0.16 wt%, about 0.17 wt%, about 0.18 wt%, or about 0.19 wt% to about 0.21 wt%, about 0.22 wt%, about 0.23 wt%, about 0.24 wt%, about 0.25 wt%, about 0.26 wt%, about 0.27 wt%, about 0.28 wt%, about 0.29 wt%, about 0.30 wt%, about 0.31 wt%, about 0.32 wt%, or greater. In another example, the amount of any one or more of the functional ingredients in the composition may be from about 0.1 wt%, about 0.2 wt%, about 0.3wt%, about 0.4 wt%, about 0.5 wt%, about 0.6 wt%, about 0.7 wt%, about 0.8 wt%, about 0.9 wt%, about 1.0 wt%, about 1.1 wt%, about 1.2 wt%, about 1.3 wt%, about 1.4 wt%, about 1.5 wt%, about 1.6 wt%, about 1.7 wt%, about 1.8 wt%, or about 1.9 wt% to about 2.1 wt%, about 2.2 wt%, about 2.3 wt%, about 2.4 wt%, about 2.5 wt%, about 2.6 wt%, about 2.7 wt%, about 2.8 wt%, about 2.9 wt%, about 3.0 wt%, about 3.1 wt%, about 3.2 wt%, or greater. In yet another example, the amount of any one or more of the functional ingredients in the composition may be from about 1.0 wt%, about 1.2 wt%, about 1.4 wt%, about 1.6 wt%, about 1.8 wt%, about 2.0 wt%, about 2.2 wt%, about 2.4 wt%, about 2.6 wt%, about 2.8 wt%, about 3.0 wt%, about 3.2 wt%, about 3.4 wt%, about 3.6 wt%, about 3.8 wt%, about 4.0 wt%, about 4.2 wt%, about 4.4 wt%, about 4.6 wt%, about 4.8 wt%, or about 5.0 wt% to about 5.2 wt%, about 5.4 wt%, about 5.6 wt%, about 5.8 wt%, about 6.0 wt%, about 6.2 wt%, about 6.4 wt%, about 6.6 wt%, about 6.8 wt%, about 7.0 wt%, about 7.2 wt%, about 7.4 wt%, about 7.6 wt%, about 7.8 wt%, about 8.0 wt%, about 8.2 wt%, about 8.4 wt%, about 8.6 wt%, about 8.8 wt%, about 9.0 wt%, about 9.2 wt%, about 9.4 wt%, about 9.6 wt%, about 9.8 wt%, or about 10.0 wt%.

The functional ingredient may be or include any one or more chemical compounds, substances, or materials beneficial to the companion animal. For example, the functional ingredient may be or include a chemical compound, substance, or material that improves or promotes the relative oral health of the companion animal. As used herein, "oral health" may refer to any oral condition involving the hard and/or soft tissues (*e.g.*, teeth, gums, *etc.*) of the oral cavity. Accordingly, the functional ingredient may be or include one or more materials that mitigates, prevents, or treats one or more oral conditions associated with the gums, tissues, and/or structures surrounding and supporting teeth. Illustrative oral conditions may include, but are not limited to, gingivitis, periodontitis, and the like. Illustrative functional ingredients that improve or promote the relative oral health of the companion animal may include, but are not limited to, polyphosphates for the inhibition of calculus and/or plaque, antimicrobials and microbial inhibitors to inhibit plaque, calculus, and/or oral malodor, fluoride for carries, anti-attachment substances for attenuating biofilm formations, anti-inflammatories for the inhibition of gingivitis and/or tissue loss, and the like, and combinations thereof. For example, the functional ingredients that improve or promote the relative oral health of the companion animal may include, but are not limited to, hexametaphosphate, chlorhexidine, cetylpyridinium chloride, essential oils, zinc, lactic acid, botanicals, botanical extracts, botanical constituents (*e.g.,* EGCG from tea), polymers to aid in the deposition and retention of other ingredients, prebiotics, probiotics, enzymes, functional flavor (*e.g.*, eugenol), antimicrobial peptides, minerals, and the like, and combinations thereof.

In another example, the functional ingredient may be or include one or more chemical compounds, substances, or materials for enhancing gastrointestinal health of a companion animal. For example, the functional ingredient may be administered to a companion animal diagnosed as suffering from or diagnosed as susceptible to a condition related to poor gastrointestinal health. Illustrative conditions may include, but are not limited to, diarrhea, irritable bowel disease, nutrient malabsorption, and the like, and combinations thereof. Illustrative functional ingredients for enhancing gastrointestinal health may include, but are not limited to, lactic acid, probiotics, prebiotics, synbiotics, microbial exopolysaccharides, and the like, and combinations thereof. It should be appreciated that the increased viscosity of the composition resulting from the addition of the viscosity enhancing agent, may increase the residence time of the composition in the esophagus and gastrointestinal tract. Accordingly, the increased residence time of the composition in the esophagus and/or the gastrointestinal tract may increase the amount of time that the gastrointestinal health enhancing agent may enhance the gastrointestinal health of the companion animal. In at least one embodiment, the functional ingredient included in the composition may decrease the level of at least one genus (*e.g.*, *Enterococcus, Desulfovibrio, Helicobacter etc.*) or species (*e.g.*, *Salmonella typhimurium, Staphylococcus aureus, Clostridium perfringens, Clostridium difficile, Vibrio parahaemolyticus, Vibrio cholerae, Bacillus cereus, Listeria monocytogenes, Yersinia enterocolitica, Campylobacter jejuni,* and, *Escherichia coli, etc.*) of deleterious bacteria.

In another example, the functional ingredient may be or include one or more anti-bacterial agents. Illustrative anti-bacterial agents may include, but are not limited to lactic acid, zinc botanicals, antibiotics, and the like, and combinations thereof. In a preferred embodiment, the antibiotic and lactic acid is combined with the viscosity enhancing agent of the composition. Illustrative antibiotics may include, but are not limited to, streptomycin, ampicillin, ciprofloxacin, cephalosporin, clindamycin, neomycin, metronidazole, teicoplanin, teicoplatin, erythromycin, doxycycline, tetracycline, augmentin, cephalexin, penicillin, kanamycin, rifamycin, rifaximin, metronidazole, timidazole, co-trimoxazole, cephamandole, ketoconazole, latamoxef, cefoperazone, amoxicillin, cefmenoxime, furazolidone, vancomycin, and the like, and combinations thereof.

In another example, the functional ingredient may be or include one or more supplements, such as vitamins, minerals, and micronutrients, which may provide nutritional support for the companion animal. Illustrative supplements may include, but are not limited to, calcium, phosphorus, potassium, sodium, magnesium, iron, zinc, copper, manganese, iodine, selenium, salts thereof, and the like, and combinations thereof. Illustrative supplements may also include, but are not limited to, vitamin A, D, E, C, thiamine, riboflavin, pantothenic acid, niacin, pyridoxine, folic acid, vitamin B12, choline, one or more amino acids, and the like, and combinations thereof. Illustrative amino acids may include, but are not limited to, arginine, histidine, isoleucine, Leucine, lysine, methionine, cysteine, cysteine, phenylalanine, tyrosine, threonine, tryptophan, valine, and the like, and combinations thereof. Illustrative supplements may further include one or more botanicals, such as boswellia, valerian officinalis, tocotrienol, lovage, cinnamon, green tea and/or extracts thereof, pomegranate and/or extracts thereof, and the like, and combinations thereof. Illustrative supplements may also include yeast, natural sources of micronutrients, and the like, and combinations thereof.

In another example, the functional ingredient may be or include one or more anti-inflammatory agents. The anti-inflammatory agents may include, but are not limited to, one or more botanicals, such as boswellia, valerian officinalis, tocotrienol, lovage, cinnamon, green tea and/or extracts thereof, pomegranate and/or extracts thereof, and the like, and combinations thereof.

In another example, the functional ingredient may be or include one or more antiparasitic agents and/or one or more anti-microbial agents. Illustrative antiparasitic agents and/or one or more anti-microbial agents may include, but are not limited to, cinnamon, green tea, antimicrobial drugs, antiparasitic drugs, and the like, and combinations thereof.

In another example, the functional ingredient may be or include one or more antioxidants. Illustrative antioxidants may include, but are not limited to, lipoic acid and plant extracts, such as phenolics, proanthrocyanidin, and green tea, as well as taurine specifically for cats, amino acids and probiotics (live microorganisms that help improve gut flora). Illustrative antioxidants may also include, but are not limited to, tocopherols, tocotrienols, one or more botanicals, and the like, and combinations thereof.

In another example, the functional ingredient may be or include one or more pharmaceutically active components. Illustrative pharmaceutically active components may include, but are not limited to, lactic acid, nonsteroidal anti-inflammatory drugs (NSAIDs), and the like, and combinations thereof. In at least one embodiment, the compositions disclosed herein may be fed to the companion animal via a feeding tube. For example, the increased viscosity of the compositions disclosed herein may facilitate and/or aid in the delivery of water and/or one or more pharmaceutically active components or any other functional ingredient to the companion animal.

In at least one embodiment, the composition may be free or substantially free of any one or more of the functional ingredients disclosed herein. As used herein, the terms "free" or "substantially free" may refer to a composition that contains less than less than 1wt%, less than 0.5 wt%, less than 0.3 wt%, less than 0.1 wt%, less than 0.05 wt%, less than 0.01 wt%, less than 0.005 wt%, or less than 0.0001 wt%. For example, the composition may be free or substantially free of any one or more of the polyphosphates, the antimicrobial and microbial inhibitors, the fluorides, the anti-attachment substances, and the anti-inflammatories. In another example, the composition may be free or substantially free of any one or more of the hexametaphosphate, the chlorhexidine, the cetylpyridinium chloride, the essential oils, the zinc, the lactic acid, the botanicals, the botanical extracts, the botanical constituents (*e.g.*, EGCG from tea), the polymers to aid in the deposition and retention of other ingredients, the prebiotics, the probiotics, the enzymes, the functional flavor (*e.g.*, eugenol), the antimicrobial peptides, and the minerals.

In at least one embodiment, the composition may be free or substantially free of any one or more of the chemical compounds, substances, or materials for enhancing gastrointestinal health of a companion animal. For example, the composition may be free or substantially free of any one or more of the chemical compounds, substances, or materials used for the treatment of a condition related to poor gastrointestinal health, such as diarrhea, irritable bowel disease, nutrient malabsorption, and the like, and combinations thereof. For example, the composition may be free or substantially free of any one or more of lactic acid, probiotics, prebiotics, synbiotics, and microbial exopolysaccharides.

In at least one embodiment, the composition may be free or substantially free of any one or more of the antibacterial agents, such as one or more of the antibiotics including streptomycin, ampicillin, ciprofloxacin, cephalosporin, clindamycin, neomycin, metronidazole, teicoplanin, teicoplatin, erythromycin, doxycycline, tetracycline, augmentin, cephalexin, penicillin, kanamycin, rifamycin, rifaximin, metronidazole, timidazole, co-trimoxazole, cephamandole, ketoconazole, latamoxef, cefoperazone, amoxicillin, cefmenoxime, furazolidone, vancomycin, and the like, and combinations thereof.

In at least one embodiment, the composition may be free or substantially free of any one or more of any one or more of the supplements disclosed herein. The composition may also be free or substantially free of any one or more of the anti-inflammatory agents disclosed herein. The composition may also be free or substantially free of any one or more of the antiparasitic agents and/or anti-microbial agents disclosed herein. The composition may further be free or substantially free of any one or more of the antioxidants disclosed herein. The composition may also be free or substantially free of any one or more of the pharmaceutically active components disclosed herein.

In at least one embodiment, the compositions disclosed herein may be disposed or packaged in a container, such as an airtight container. Illustrative containers may include, but are not limited to, a retort pouch, a sachet, a TETRA PAK®, a bottle, a tray, a metal can (*e.g.*, tin can), and the like, and combinations thereof. In a preferred embodiment, the composition is disposed in a retort pouch or a sachet that is portable and/or disposable. It should be appreciated that each of the containers may include any number of servings of the composition. For example, each container may include a single serving or multiple servings.

In at least one embodiment, a portion of the composition may be packaged in the container. For example, all the components of the composition, except the water, may be packaged in the container, and the contents of the container may be combined with water to form the compositions disclosed herein. The contents of the container in this embodiment may be a powder, a gel, or a liquid. This may allow for a smaller container that may be more easily stored or transported prior to use. In another embodiment, all components of the composition are packaged in the container. For example, the water, the viscosity enhancing agent, and optionally, one or more functional ingredients may be disposed in the container.

Methods

In one or more embodiments, the present disclosure provides compositions as defined in the claims for use in methods for treating lower urinary tract diseases as defined in the claims in companion animals. Feline companion animals may be or include cats at risk, or having increased risk, of calcium oxalate stone formation. The present disclosure may also provide methods for increasing the consumption of water in companion animals. The present disclosure may further provide methods for reducing hairball formation or the incidence of hairballs in cats. The methods may include feeding or providing the companion animal (*e.g.*, cats) with a composition including water and a viscosity enhancing material as defined in the claims in an effective amount to increase the consumption of water in the companion animal, treat the lower urinary tract diseases in the companion animals, and/or reduce hairball formation or the incidence of hairballs.

The present disclosure may also provide compositions for use in methods for delivering a functional ingredient to the companion animal. For example, the present disclosure may provide a composition for use in a method for delivering a functional ingredient to surfaces of the oral cavity of the companion animal. The functional ingredient may be provided in an effective amount to treat oral diseases or conditions, improve the oral health, and/or enhance gastrointestinal health of a companion animal. The method may include feeding or providing the companion animal with a composition including water, the viscosity enhancing material as defined in the claims, and the functional ingredient.

Some embodiments of the present invention provide methods for improving CORI score; reducing struvite, oxalate or other crystals and stones in the urine and the upper and lower urinary tract (i.e., renal, bladder urethra); reducing the concentration of calcium in the urine; reducing the concentration of stone forming components in the urine; reducing the fractional excretion of calcium; reducing urine specific gravity; reducing urinary saturation of minerals; reducing the relative super saturation of urine; increasing fluid intake; increasing urine output; or reducing hairball formation, in a companion animal, comprising administering a composition as described herein to a companion animal.

In some embodiments, greater than about 90 g/day of the composition is consumed by the companion animal. In other embodiments, greater than about 100 g/day of the composition is consumed by the companion animal. In certain embodiments, greater than about 110 g/day of the composition is consumed by the companion animal. In some embodiments, greater than about 120 g/day of the composition is consumed by the companion animal. In other embodiments, greater than about 130 g/day of the composition is consumed by the companion animal.

Useful for understanding the invention are methods for identifying a composition that provides a hydration benefit to a mammal, or a method for predicting water intake by a mammal, such as a cat. The method may comprise: inserting a first probe into a vessel containing a control composition having a viscosity of less than about 5 cP (e.g. less than about 2 cP); calculating the amount of control composition retained on the first probe; inserting a second probe into a vessel containing a test composition; calculating the amount of test composition retained on the second probe; comparing the amount of control composition retained on the first probe to the amount of the test composition retained on the second probe; wherein when the difference between the amount of the test composition retained on the second probe and the amount of control composition retained on the first probe is greater than about 0.025 grams, the composition is identified as providing a hydration benefit to a mammal. The methods may further comprise additional vessels, additional probes, and/or additional test compositions. Other methods comprise from about 2 to about 100 vessels, from about 2 to about 100 respective probes; and from about 2 to about 100 respective test compositions. It should be appreciated that each of the probes, such as the first and second probes, may be the same or substantially the same. For example, the same probe may be utilized, after washing between testing, or different probes having the same or substantially the same features may be utilized.

Useful for understanding the invention is a method for determining or predicting water intake by a mammal via consumption of a composition having water, such as any one or more of the compositions disclosed herein or any other drinking composition. The method may include contacting or otherwise immersing at least a portion or predetermined portion of a probe into the composition having water. The method may also include weighing the probe before and after immersion into the composition, and determining the amount of the composition retained on the probe. The amount of time between immersion and weight may vary widely. In at least one example, the probe may be immediately weighed upon removing the probe from the composition. In another example, the probe may be removed from the composition and allowed to "drip" for a time of from about 1 sec, about 5 sec, about 10 sec, about 15 sec, about 20 sec, about 1 min, about 2 min, about 3 min, or more, prior to weighing the probe. The method may further include applying statistical methods (e.g., linear model analysis) to the amount of the composition consumed and the amount of the composition retained on the probe to determine a relationship therebetween. The statistical methods may be at least partially determined by one or more of the following: the dimensions of the probe, such as height, width, length, the surface area of the probe, roughness of the probe, weight of the probe, materials from which the probe is made, length of time of immersing the probe, length of time the probe is allowed to "drip" after removing the probe from the composition, density of the composition, amount of the composition consumed by the companion animal, initial weight of the probe before immersion, final weight of the probe after immersion, amount of water contained in the composition, or the like, or any combination thereof. It should be appreciated that the probe may mimic a companion animal's tongue, such as a cat or feline's tongue. As such, increasing retention of the composition on the probe may indicate or predict increased ingestion of water. The relationship between the retention of the composition on the probe to the amount of water ingested may follow a linear relationship, a quadratic relationship, an exponential relationship, or the like.

The difference between the amount of the test composition retained on the second probe and the amount of control composition retained on the first probe is greater than about 0.025 grams, about 0.03 grams, about 0.35 grams, about 0.04 grams, or about 0.045 grams. The difference between the amount of the test composition retained on the second probe and the amount of control composition retained on the first probe is about 0.05 grams, about 0.1 grams, about 0.15 grams, about 0.20 grams, about 0.25 grams, about 0.30 grams, about 0.35 grams, about 0.40 grams, about 0.45 grams, about 0.5 grams, about 0.55 grams, about 0.60 grams, about 0.65 grams, about 0.70 grams, about 0.75 grams, about 0.80 grams, about 0.85 grams, about 0.90 grams, or about 0.90 grams.

The hydration benefit can be selected from: an improved CORI score; a reduction in struvite, oxalate or other crystals and stones both in the urine and the upper and lower urinary tract (i.e., renal, bladder urethra); a reduction in concentration of calcium in the urine; a reduction in the concentration of stone forming components in the urine; a reduction in the fractional excretion of calcium; a reduction in urine specific gravity; reduced urinary saturation of minerals; reduction in the relative super saturation of urine; increased fluid intake, and increased urine output.

Other methods useful for understanding the invention provide methods further comprising the step of determining (e.g. quantifying) the hydration benefit provided to a companion animal by the test composition. The hydration benefit provided to a companion animal can be determined using the following equation:

$$\text{Hydration benefit} = ((\text{wt. on probe from test composition}) - (\text{wt. on probe from control composition})) * 2.7 \text{ grams}$$

Useful for understanding the invention are methods further comprising the step of determining the ability of the test composition to deliver a bioactive substance to the bladder or urinary tract.

The probe may mimic or at least partially mimic a tongue or a surface of a tongue of the mammal. For example, it should be appreciated that the surface of a cat's tongue may be rough or may include a plurality of protuberances or no nodules, thereby providing a textured surface. As such, the probe may include a substrate having a textured surface. The probe may comprise a substrate that mimics the anatomy of the tongue of a companion animal. The probe may comprises a substrate comprising a plurality of protuberances. The protuberances may have a dimension of from about 1 nm to about 1 cm. The probe may comprise an emery board.

The probe may have a first dimension of from about 4 to about 6 inches and a second dimension of from about an eighth of inch to about 2 inches. The probe may have a first dimension of from about 4 inches to about 5 inches and a second dimension of from about one-half inch to about 1 inch. The probe may have a first dimension of from about 4 inches to about 5 inches and a second dimension of from about one-half inch to about 1 inch. The probe may have a first dimension of from about 4.5 inches to about 5 inches and a second dimension of from about one-half inch to about ¾ inch. The probe may have a first dimension of 4 and 11/16 inches and a second dimension of about 9/16 of an inch.

The invention is further described in the following examples. The examples are merely illustrative and do not in any way limit the scope of the invention as described and claimed

**EXAMPLES**

Example 1

Seven compositions (1)-(7) with varying concentrations of a viscosity enhancing agent, namely a methylcellulose-type viscosity enhancing agent, METHOCEL™ E4M, were prepared via conventional methods. The first or control composition (1) contained water, and did not contain METHOCEL™ E4M. The remaining compositions or test compositions (2)-(7) contained varying concentrations of METHOCEL™ E4M (abbreviated as "MC" in Table 1), which are indicated in Table 1. Each of the test compositions (2)-(7) were prepared by combining and stirring METHOCEL™ E4M with water in a container with optional heating. The viscosity of each of the compositions (1)-(7) is summarized in Table 1. The control composition (1) and the test compositions (2)-(7) were fed to cats to observe the amount consumed. The consumption of the control composition (1) and the test compositions (2)-(7) are summarized in Table 1.

**Table 1**

| # | Viscosity Enhancing Agent (wt%) | Viscosity (cP) | Consumption of Control Composition (g) | Consumption of Test Composition (g) | Ratio of Control: Test |
|---|---|---|---|---|---|
| 1* | 0.00 MC | 4.90 | 86 | 68.2 | 0.44 |
| 2 | 0.05 MC | 9.82 | 75 | 92.9 | 0.57 |
| 3 | 0.15 MC | 12.40 | 64.7 | 105.3 | 0.62 |
| 4 | 0.25 MC | 15.55 | 55.2 | 108.1 | 0.66 |
| 5 | 0.50 MC | 46.15 | 57.1 | 115.1 | 0.67 |
| 6 | 0.75 MC | 259.25 | 46.1 | 105.9 | 0.70 |
| 7 | 1.00 MC | 282 | 50.9 | 139.9 | 0.73 |
| 8* | 1.05 PT | 178 | 69.08 | 5.58 | 0.075 |
| 9* | 1.00 AG | 198 | 60.16 | 28.83 | 0.32 |
| *: comparative compositions | | | | | |

As is evident from Table 1, the cats exhibited an unexpected increase in preference for the test compositions (2)-(7) having a viscosity of about 10 cP or greater over the control composition (1), which contained water alone. The results were all statistically significant ($p=0.02$).

The preference of the companion animals for methylcellulose over other viscosity enhancing agents was also evaluated. To evaluate the preference of the cats for a methylcellulose-type viscosity enhancing agent, such as METHOCEL™ over other viscosity enhancing agents, two test compositions (8) and (9), each containing different viscosity enhancing agents were prepared and presented to the cats. Particularly, test composition (8) was prepared with 1.05% pectin (abbreviated as "PT" in Table 1), and test composition (9) was prepared with 1.00% alginate (abbreviated as "AG" in Table 1). The results of the study are further summarized in Table 1. As evident from Table 1, the cats had a reduced desire to consume both the test composition (8) containing 1.05% pectin and having a viscosity of 178 cP and test composition (9) containing 1.00% alginate and having a viscosity of 198 cP, as compared to the test composition (6), which exhibited a comparable viscosity of about 260 cP.

Example 2

Control composition (1) and test composition (7) from Example 1 were further tested in a crossover study where each cat was presented with either the control composition (1) or the test composition (7) for 56 days, and after 56 days, the cats fed the control composition (1) were fed the test composition (7), and the cats fed the test composition (7) were fed the control composition (1). The results of the study are summarized in Table 2.

**Table 2: Daily Consumption Per Cat Over 56 Days**

| Consumption of Control Composition (1) (g) | Consumption of Test Composition (7) (g) |
|---|---|
| 66 | 80 |

As is evident from Table 2, the cats consumed about 21 % more of the test composition (7), having a viscosity of about 282 cP, as compared to the control composition (1), which had a viscosity of about 5 cP. The results further evidenced the preference of the cats for the test composition (7) having a relatively higher viscosity of about 282 cP. It should be noted, after the 56 day study, three cats fed the control composition (1) exhibited calcium oxalate stone formation, while none of the cats fed the test composition (7) exhibited calcium oxalate stone formation. The reduction in calcium oxalate stone formation was attributed to the increased water consumption in the cats fed the test composition (7), as further outlined below in Example 3.

Example 3

A study on the urinary tract health of the cats fed the control composition (1) and the test composition (7) of Example 1 was conducted. Specifically, a Calcium Oxalate Risk Index (CORI) was conducted on urine of the cats fed the control composition (1) and the test composition (7). The CORI is used to determine the risk of a pet to develop a calcium oxalate stone. The CORI is also used to determine the ability of the composition including the viscosity enhancing agent to mitigate the risk of future stone formation. It may further be used to determine the efficacy of the compositions in reducing the risk of calcium oxalate stone formation. The CORI study takes into account any and all inhibitors and promoters in the urine of the cats that may not be well known. To conduct the CORI study, whole or untreated urine is titrated with sodium oxalate until calcium oxalate precipitates, and the concentration of calcium in the urine is divided by the amount of sodium oxalate added. A panel of 12 cats was used in this study. The results of the study on the urinary tract health of the cats are summarized in Tables 3 and 4.

**Table 3**

| Least Squares Means | | | | |
|---|---|---|---|---|
| **Effect** | **Water** | **Estimate** | **Standard Error** | **DF** |
| **Water** | **Control** | 66.3408 | 1.3642 | 11 |
| **Water** | **Test** | 80.0125 | 1.3509 | 11 |

**Table 4**

| **Effect** | **Diet** | **Estimate** | **Standard Error** | **DF** |
|---|---|---|---|---|
| **Diet** | **Control** | 76.7258 | 24.2072 | 11 |
| **Diet** | **Test** | 37.8707 | 6.4494 | 11 |

As is evident from Tables 3 and 4, feeding the cats the test compositions (7) decreased the calcium oxalate risk index (CORI); and thus, decreased the formation of calcium oxalate crystals. The decrease in the CORI correspondingly resulted in a lowered fractional excretion of calcium. It was also observed, as summarized in Table 5, that the consumption of the test composition (7) resulted in a lower level of circulating creatinine, which suggests a renal benefit for the test composition (7). The results of the creatinine study were statistically significant ($p < 0.05$).

**Table 5**

| Least Squares Means | | | | |
|---|---|---|---|---|
| **Effect** | **Water** | **Estimate** | **Standard Error** | **DF** |
| **Diet** | **Control** | 1.3885 | 0.06808 | 11 |
| **Diet** | **Test** | 1.2664 | 0.04565 | 11 |

Example 4

A study was conducted to observe the activity and interaction (*e.g.*, batting ears, body rubbing, climbing, jumping, *etc.*) of 13 cats offered both the control composition (1) and the test composition (7). Three different time periods were evaluated on each of two days. Each time period was for 30 minutes, and activity was evaluated/observed by three evaluators. The results of the study are summarized in Table 6.

**Table 6**

| Cat | Bat Ears | Body Rub | Climb/ Jump | Drinking Control Composition | Drinking Test Composition |
|-----|----------|----------|-------------|------------------------------|---------------------------|
| 1 | 0 | 0 | 6 | 0 | 0 |
| 2 | 1 | 0 | 6 | 0 | 4 |
| 3 | 11 | 4 | 8 | 0 | 1 |
| 4 | 0 | 0 | 4 | 0 | 1 |
| 5 | 0 | 2 | 11 | 0 | 2 |
| 6 | 0 | 0 | 0 | 1 | 12 |
| 7 | 0 | 3 | 14 | 1 | 0 |
| 8 | 0 | 1 | 15 | 0 | 3 |
| 9 | 0 | 0 | 3 | 0 | 5 |
| 10 | 0 | 0 | 6 | 0 | 6 |
| 11 | 0 | 0 | 7 | 0 | 1 |
| 12 | 0 | 2 | 13 | 0 | 2 |
| 13 | 1 | 1 | 23 | 3 | 9 |
| Total | 24 | 20 | 153 | 4 | 69 |

As is evident from Table 6, the cats fed the test compositions (7) exhibited increased interaction with the water bowl as the significant (69 versus 4) observed with drinking behavior over cats fed the control composition (water).

Example 5

A study was also conducted to observe the reduction of hairballs in cats fed the control composition (1) and the test composition (7). In this study, 12 cats were presented with either the control composition (1) or the test composition (7) for 56 days. This was a cross-over designed study. Accordingly, after the 56 days, the cats fed the control composition (1) were fed the test composition (7), and the cats fed the test composition (7) were fed the control composition (1). It was observed that four cats fed the test composition (7) had an occurrence with a hairball, while seven cats fed the control composition (1) had an occurrence with a hairball. Three cats had hairballs on both compositions. Of those that only had a hairball on one composition, four experienced a hairball on the control composition (1) and one on the test composition (7). The results of the study were also significant (p=0.05777).

Example 6

Table 7 (below) describes the results of a Water Visualization Assay performed in accordance with certain embodiments of the claimed invention. In particular, a probe (i.e., emery board) was inserted into a vessel containing a flowable composition; and the amount (e.g. grams) of the composition retained on the probe was calculated. Visual observations related to the portion of the probe covered by the composition and retention time on the probe were also recorded.

**Table 7**

| # | Viscosity Enhancing Agent (wt%) | Viscosity (cP) | Amount Retained on Probe (g) | Consumption of Test Composition (g) |
|---|---|---|---|---|
| 1* | 0.00 MC | 4.90 | 0.116 | 68.2 |
| 2 | 0.05 MC | 9.82 | 0.166 | 92.9 |
| 3 | 0.15 MC | 12.40 | 0.215 | 105.3 |
| 4 | 0.25 MC | 15.55 | 0.255 | 108.1 |
| 5 | 0.50 MC | 46.15 | 0.464 | 115.1 |
| 6 | 0.75 MC | 259.25 | 0.722 | 105.9 |
| 7 | 1.00 MC | 282 | 0.974 | 139.9 |
| *: comparative composition | | | | |

The data described in Table 7 illustrates the relationship between the amount of a composition retained on an emery board (i.e., 15 mm x 60 mm) and the amount consumed by a companion animal. It should be appreciated that applying standard statistical analysis (General Linear Model Analysis using the SAS 9.4 Statistical Package) on the amount of the composition retained on the probe (g) to the consumption of the composition, resulted in an $R^2$ value of about 0.98, thereby demonstrating the efficacy of the method for determining or predicting the amount of water consumed by a mammal (e.g., a cat) via consumption of the composition. The relationship between the predicted amount of the composition consumed and the actual amount of the composition consumed was represented by the following equation:

$$Y = 9.0 + 685.6 \times X - 1343.9 \times X^2 + 799.0 \times X^3$$

where Y is the predicted intake of the composition, and X is the amount of the composition retained on the probe. As discussed herein, however, it should be appreciated that the statistical model or equation relating the predicted amount of water consumed by the mammal with the actual amount of water consumed may vary, and may be at least partially determined my varying factors, such as, the dimensions of the probe (e.g., as height, width, length, circumference, etc.) the surface area of the probe, roughness of the probe, weight of the probe, materials from which the probe is made, length of time of immersing the probe, length of time the probe is allowed to "drip" after removing the probe from the composition, density of the composition, amount of the composition consumed by the companion animal, initial weight of the probe before immersion, final weight of the probe after immersion, amount of water contained in the composition, or the like, or any combination thereof.

Example 8

As demonstrated above in Example 2, the cats consumed about 21% more of the test composition (7), having a viscosity of about 282 cP, as compared to the control composition (1), which had a viscosity of about 5 cP. The same cats were evaluated during the study for circulating blood urea nitrogen (BUN), circulating cholesterol, and circulating triglycerides. The result are summarized in Tables 8 to 10 below.

**Table 8:**

| The Effect of Viscous Water On Circulating Blood Urea Nitrogen | | |
|---|---|---|
| Least Squares Means | | |
| Composition | LS Mean | SE |
| Composition (1) | 19.8 | 0.77 |
| Composition (7) | 18.0 | 0.77 |

**Table 9:**

| The Effect of Viscous Water On Circulating Cholesterol | | |
|---|---|---|
| Least Squares Means | | |
| Composition | LS Mean | SE |
| Composition (1) | 208.4 | 9.0 |
| Composition (7) | 195.6 | 9.0 |

**Table 10:**

| The Effect of Viscous Water On Circulating Triglycerides | | |
|---|---|---|
| Least Squares Means | | |
| Composition | LS Mean | SE |
| Composition (1) | 23.6 | 1.57 |
| Composition (7) | 21.2 | 1.57 |

As indicated in Tables 8 to 10, the cats fed the test composition (7) exhibited relatively lower amounts of circulating blood urine nitrogen, cholesterol, and triglycerides, as compared to the cats fed the control composition (1). As such, the increased preference of the cats for the test composition (7), having a relatively higher viscosity of about 282 cP, over the control composition (1), which has a viscosity of about 5 cP, resulted in improvements in markers for health, namely, circulating BUN, cholesterol, and triglycerides. Without being bound by theory, it is believed the improvements in the markers for health in the cats fed the test composition (7) were at least partially attributed to the increased water consumption.

**Claims**

1. An aqueous composition for increasing the hydration of a feline, comprising:

   water, and
   an effective amount of a viscosity modifying agent comprising methylcellulose;
   wherein the viscosity modifying agent is present in an amount of from 0.05 wt.% to 1 wt.%, and
   wherein the composition has a viscosity greater than 5 mPa·s to 290 mPa·s when determined at about 25°C as the internal resistance to flow exhibited by water or the ratio of shearing stress to rate of shear using a viscometer.

2. The composition according to claim 1, wherein the viscosity modifying agent is present in an amount of from about 0.15 wt.% to about 0.75 wt.%, or from about 0.25 wt.% to about 0.5 wt.%.

3. The composition according to any one of the foregoing claims, wherein the viscosity modifying agent further comprises: plant mucilage, a plant gum, dextrin, maltodextrin, a galactomannan, an arabanogalactan, a beta glucan, a pectin, a water-soluble hemicellulose, inulin, an alginate, agar, carrageenan, psyllium, guar gum, gum traganth, gum karya, gum ghatti, gum acacia, gum arabic, a partially hydrolyzed product thereof, or a combination of two or more thereof.

4. The composition according to any one of the foregoing claims, wherein the viscosity modifying agent further comprises a starch.

5. The composition according to any one of the foregoing claims, further comprising a flavorant.

6. The composition according to claim 5, wherein the flavorant is selected from:

   a coconut concentrate, a cranberry concentrate, a green tea, a fruit or vegetable concentrate, a vitamin supplement, an amino acid, a protein, a plant extract,
peppermint oil, spearmint, a rosemary extract, parsley, a malodor control agent, and a combination of two or more thereof.

7. The composition according to any one of the foregoing claims, further comprising a functional ingredient.

8. The composition according to claim 7, wherein the functional ingredient is formulated to be delivered to the oral cavity or digestive tract of the companion animal.

9. The composition of claim 7 or claim 8, wherein the functional ingredient is selected from an antimicrobial; a prebiotic; a probiotic; an oral care active; a pharmaceutical agent; and a combination of two or more thereof.

10. The composition of any one of the foregoing claims, wherein the functional ingredient is selected from: lactic acid, boswellia extract, a beta-glucan, betaine, green tea, fenugreek, tulsi, arginine, lysine, and a combination of two more thereof.

11. The composition according to any foregoing claim, wherein the feline is a companion animal.

12. A composition according to any one of the foregoing claims for use in a method for:

- improving a Calcium Oxalate Risk Index (CORI) score;
- reducing struvite, oxalate or other crystals and stones in the urine and the upper and lower urinary tract;
- reducing the concentration of calcium in the urine;
- reducing the concentration of stone forming components in the urine;
- reducing the fractional excretion of calcium;
- reducing urine specific gravity;
- reducing urinary saturation of minerals;
- reducing the relative super saturation of urine;
- increasing fluid intake;
- increasing urine output; or
- reducing hairball formation,

in a feline companion animal.

13. The composition for use according to claim 12, wherein greater than about 90 g/day, greater than about 100 g/day, greater than about 110 g/day, greater than about 120 g/day, or greater than about 130 g/day of the composition is consumed by the companion animal.

14. The composition for use according to claim 12 or claim 13, wherein the method is for reducing hairball formation.


**Patentansprüche**

1. Wässrige Zusammensetzung zur Erhöhung der Hydratation einer Katze, umfassend:

Wasser und
eine wirksame Menge eines viskositätsmodifizierenden Mittels, umfassend Methylcellulose;
wobei das viskositätsmodifizierende Mittel in einer Menge von 0,05 Gew.-% bis 1 Gew.-% vorhanden ist, und wobei die Zusammensetzung eine Viskosität von mehr als 5 mPa·s bis 290 mPa·s aufweist, wenn sie bei etwa 25 °C als innerer Fließwiderstand von Wasser oder als Verhältnis von Scherspannung zur Schergeschwindigkeit unter Verwendung eines Viskosimeters bestimmt wird.

2. Zusammensetzung nach Anspruch 1, wobei das viskositätsmodifizierende Mittel in einer Menge von etwa 0,15 Gew.-% bis etwa 0,75 Gew.-% oder von etwa 0,25 Gew.-% bis etwa 0,5 Gew.-% vorhanden ist.

3. Zusammensetzung nach einem der vorstehenden Ansprüche, wobei das viskositätsmodifizierende Mittel ferner umfasst: pflanzliche Schleimstoffe, ein pflanzliches Gummi, Dextrin, Maltodextrin, ein Galactomannan, ein Arabanogalactan, ein Beta-Glucan, ein Pektin, eine wasserlösliche Hemicellulose, Inulin, ein Alginat, Agar, Carrageen, Psyllium, Guarkernmehl, Traganthgummi, Karyagummi, Ghattigummi, Akaziengummi, Gummiarabicum, ein teilweise hydrolysiertes Produkt davon oder eine Kombination von zwei oder mehreren davon.

4. Zusammensetzung nach einem der vorhergehenden Ansprüche, wobei das viskositätsmodifizierende Mittel ferner eine Stärke umfasst.

5. Zusammensetzung nach einem der vorhergehenden Ansprüche, die ferner einen Geschmacksstoff umfasst.

6. Zusammensetzung nach Anspruch 5, wobei der Geschmacksstoff ausgewählt ist unter: einem Kokosnusskonzentrat, einem Preiselbeerkonzentrat, einem grünen Tee, einem Frucht- oder Gemüsekonzentrat, einem Vitaminzusatz, einer Aminosäure, einem Protein, einem Pflanzenextrakt, Pfefferminzöl, Krauseminze, einem Rosmarinextrakt, Petersilie, einem Mittel zur Geruchsbekämpfung und einer Kombination aus zwei oder mehr davon.

7. Zusammensetzung nach einem der vorangehenden Ansprüche, die ferner einen funktionellen Inhaltsstoff enthält.

8. Zusammensetzung nach Anspruch 7, wobei der funktionelle Inhaltsstoff so formuliert ist, dass er in die Mundhöhle oder den Verdauungstrakt des Haustieres abgegeben werden kann.

9. Zusammensetzung nach Anspruch 7 oder Anspruch 8, wobei der funktionelle Inhaltsstoff ausgewählt ist unter einem antimikrobiellen Mittel, einem Präbiotikum, einem Probiotikum, einem Mundpflegewirkstoff, einem pharmazeutischen Wirkstoff und einer Kombination aus zwei oder mehr davon.

10. Zusammensetzung nach einem der vorhergehenden Ansprüche, wobei der funktionelle Inhaltsstoff ausgewählt ist unter: Milchsäure, Boswellia-Extrakt, einem Beta-Glucan, Betain, grünem Tee, Bockshornklee, Tulsi, Arginin, Lysin und einer Kombination aus zwei weiteren davon.

11. Zusammensetzung nach einem der vorstehenden Ansprüche, wobei die Katze ein Haustier ist.

12. Zusammensetzung nach einem der vorangehenden Ansprüche zur Verwendung in einem Verfahren zur:

- Verbesserung eines Calcium-Oxalat-Risiko-Index (CORI),
- Reduzierung von Struvit-, Oxalat- oder anderen Kristallen und Steinen im Urin und in den oberen und unteren Harnwegen,
- Verringerung der Kalziumkonzentration im Urin,
- Verringerung der Konzentration von steinbildenden Bestandteilen im Urin,
- Verringerung der fraktionierten Ausscheidung von Calcium,
- Verringerung des spezifischen Gewichts des Urins,
- Verringerung der Sättigung von Mineralien im Urin,
- Verringerung der relativen Übersättigung des Urins,
- Erhöhung der Flüssigkeitszufuhr,
- Erhöhung der Urinausscheidung oder
- Verringerung der Haarballenbildung

bei einem Haustier, das eine Katze ist.

13. Zusammensetzung zur Verwendung nach Anspruch 12, wobei mehr als etwa 90 g/Tag, mehr als etwa 100 g/Tag, mehr als etwa 110 g/Tag, mehr als etwa 120 g/Tag oder mehr als etwa 130 g/Tag der Zusammensetzung von dem Haustier verzehrt wird.

14. Zusammensetzung zur Verwendung nach Anspruch 12 oder Anspruch 13, wobei das Verfahren zur Verringerung der Haarballenbildung dient

**Revendications**

1. Composition aqueuse pour augmenter l'hydratation d'un félin, comprenant :

de l'eau, et

une quantité efficace d'un agent modificateur de viscosité comprenant de la méthylcellulose ;

dans laquelle l'agent modificateur de viscosité est présent en une quantité allant de 0,05 % en poids à 1 % en poids, et

dans laquelle la composition a une viscosité supérieure à 5 mPa.s à 290 mPa.s lorsqu'elle est déterminée à environ 25 °C comme étant la résistance interne à l'écoulement présentée par l'eau ou le rapport entre la contrainte de cisaillement et la vitesse de cisaillement à l'aide d'un viscosimètre.

2. Composition selon la revendication 1, dans laquelle l'agent modificateur de viscosité est présent en une quantité d'environ 0,15 % en poids à environ 0,75 % en poids, ou d'environ 0,25 % en poids à environ 0,5 % en poids.

3. Composition selon l'une quelconque des revendications précédentes, dans laquelle l'agent modificateur de viscosité comprend en outre : un mucilage végétal, une gomme végétale, la dextrine, la maltodextrine, un galactomannane, un arabino-galactane, un bêta-glucane, une pectine, une hémicellulose hydrosoluble, l'inuline, un alginate, la gélose, un carraghénane, le psyllium, la gomme guar, la gomme adragante, la gomme karaya, la gomme ghatti, la gomme d'acacia, la gomme arabique, un produit partiellement hydrolysé de ceux-ci, ou une combinaison de deux ou plus de ceux-ci.

4. Composition selon l'une quelconque des revendications précédentes, dans laquelle l'agent modificateur de viscosité comprend en outre un amidon.

5. Composition selon l'une quelconque des revendications précédentes, comprenant en outre un arôme.

6. Composition selon la revendication 5, dans laquelle l'arôme est choisi parmi : un concentré de noix de coco, un concentré de canneberge, un thé vert, un concentré de fruit ou de légume, un supplément vitaminique, un acide aminé, une protéine, un extrait de plante, l'huile essentielle de menthe poivrée, la menthe verte, un extrait de romarin, le persil, un agent de lutte contre les mauvaises odeurs, et une combinaison de deux ou plus d'entre eux.

7. Composition selon l'une quelconque des revendications précédentes, comprenant en outre un ingrédient fonctionnel.

8. Composition selon la revendication 7, dans laquelle l'ingrédient fonctionnel est formulé pour être administré à la cavité buccale ou au tube digestif de l'animal de compagnie.

9. Composition selon la revendication 7 ou la revendication 8, dans laquelle l'ingrédient fonctionnel est choisi parmi un antimicrobien ; un prébiotique ; un pro-biotique ; un actif de soin bucco-dentaire ; un agent pharmaceutique ; et une combinaison de deux ou plus de ceux-ci.

10. Composition selon l'une quelconque des revendications précédentes, dans laquelle l'ingrédient fonctionnel est choisi parmi : l'acide lactique, l'extrait de boswellia, un bêta-glucane, la bétaïne, le thé vert, le fenugrec, le tulsi, l'arginine, la lysine et une combinaison de deux ou plus de ceux-ci.

11. Composition selon l'une quelconque des revendications précédentes, dans laquelle le félin est un animal de compagnie.

12. Composition selon l'une quelconque des revendications précédentes pour une utilisation dans un procédé pour :

- améliorer un score de l'indice de risque d'oxalate de calcium (CORI) ;
- réduire la struvite, l'oxalate ou d'autres cristaux et calculs dans l'urine et les voies urinaires supérieures et inférieures ;
- réduire la concentration de calcium dans l'urine ;
- réduire la concentration de constituants formant des calculs dans l'urine ;
- réduire l'excrétion fractionnée du calcium ;
- réduire la densité de l'urine ;
- réduire la saturation urinaire en minéraux ;
- réduire la sursaturation relative de l'urine ;
- augmenter l'apport de liquides ;
- augmenter le débit urinaire ; ou
- réduire la formation de boules de poils,

chez un animal de compagnie félin.

13. Composition pour une utilisation selon la revendication 12, dans laquelle plus d'environ 90 g/jour, plus d'environ 100 g/jour, plus d'environ 110 g/jour, plus d'environ 120 g/jour ou plus d'environ 130 g jour de la composition sont consommés par l'animal de compagnie.

14. Composition pour une utilisation selon la revendication 12 ou la revendication 13, dans laquelle le procédé est destiné à réduire la formation de boules de poils.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02051443 A2

- US 6248390 B1